# DEMANDE DE BREVET EUROPEEN

(11) **EP 4 414 958 A1**
(43) Date de publication de la demande: **14.08.2024**
(21) Numéro de dépôt: 24156728.8
(22) Date de dépôt: 09.02.2024
(51) Int. Cl.: G08B 21/02, G08B 21/22, G08B 7/06, G08B 13/181, G08B 13/183, F16P 1/00

(54) **SYSTEME DETECTEUR AVERTISSEUR ET INSTALLATION LE COMPORTANT**

(30) Priorité: 13.02.2023 FR 2301310
(71) Demandeur: Totem, 69400 Gleize (FR)
(72) Inventeur: JOURDAN, Claude, 69640 Cogny (FR); JOURDAN, Christophe, 01090 Francheleins (FR)
(74) Mandataire: Oudin, Stéphane

(57) **Abrégé**

Système détecteur avertisseur (1) comportant un corps (2) longitudinal, au moins un organe de détection (4) de présence disposé latéralement sur ledit corps (2), des moyens de traitement du signal de détection et des moyens d'actionnement de moyens avertisseur, **caractérisé par le fait que** le au moins un organe de détection (4) est monté pivotant par rapport au corps (2) autour d'un axe longitudinal.

Installation comportant au moins un système détecteur avertisseur (1).

## Description

Le domaine technique de l'invention concerne celui des systèmes détecteur avertisseurs.

L'invention présente un intérêt particulier pour une utilisation dans des structures ou des lieux dans lesquels des personnes et des véhicules de transport et de manutention se croisent, comme par exemple les sites industriels, les usines, les entrepôts, les plateformes logistiques.

Par les termes « véhicules de transport et de manutention », on désigne des véhicules motorisés aptes à soulever, transporter, déplacer des produits ou des marchandises, comme par exemple des chariots de manutention, des chariots élévateurs, des transpalettes, des gerbeurs, des camions ou des camionnettes.

Les déplacements de différents véhicules, notamment des véhicules de transport et de manutention, dans une même zone peut donner lieu à des accidents notamment de type collision.

La présence sur cette même zone de personnes se déplaçant à pied augmente encore les risques d'accidents notamment de type collision.

La vitesse, la baisse d'attention des conducteurs, la fatigue peuvent faire baisser la vigilance des conducteurs de véhicules.

De plus, un conducteur d'un véhicule, du fait de sa position de conduite sur ou dans ledit véhicule, peut avoir des angles de vues bouchés, dits angles morts.

Cela augmente le risque d'accidents notamment de type collision du fait d'une mauvaise visibilité.

C'est d'autant plus vrai dans le cas de véhicules de transport et de manutention, et encore plus si ledit véhicule soulève, transporte ou déplace des produits ou des marchandises.

En outre, si le sol est lisse ou glissant, le freinage dudit véhicule peut être dégradé. Et une détection tardive augmente encore les risques d'accidents notamment de type collision.

Enfin, la présence d'intersections, de racks de stockage, de murs ou tout autre élément de l'environnement bloquant la visibilité peut augmenter les risques d'accidents.

Pour y remédier, différentes solutions techniques ont été imaginées.

Ainsi, pour éviter les collisions avec les murs ou l'environnement à proximité du sol, il a été imaginé des protections fixes de type barrières, constituées de poteaux et de lisses montées entre lesdits poteaux.

Des éléments de signalisation, de type indications au sol et panneaux sur les murs indiquant les lieux dangereux peuvent être installés, de même que des miroirs sur des parois ou poteaux pour mieux voir d'autres voies piétonnes ou des voies de passage de véhicules cachées par l'environnement.

Des éléments de type portillon peuvent permettre également de sécuriser les intersections entre des voies piétonnes et des voies de passage de véhicules.

Ces éléments permettent aux conducteurs de véhicules et aux personnes se déplaçant sur la zone d'être informés d'une zone de risque particulière.

L'inconvénient de ces éléments fixes est qu'un conducteur ou qu'une personne familière de la zone peut baisser sa vigilance avec le temps, avec le sentiment de bien connaitre la zone.

Pour aider à augmenter cette vigilance, il a été imaginé d'équiper des véhicules d'avertisseurs lumineux et/ou sonores pour informer de la présence du véhicule et de ses mouvements.

En effet, du fait de ses caractéristiques physiologiques, une personne est plus sensible à une lumière ou un son, ou à un mouvement dans son champ de vision, et est moins sensible à un élément fixe.

Afin de prendre en compte cet état de fait pour réduire les accidents, des solutions additionnelles de sécurité ont été imaginées.

Ainsi, il existe des détecteurs de présence montés sur une structure, disposés avant un croisement de deux voies, voie piétonne et/ou voies de passage de véhicules, ce détecteur de présence actionnant des moyens d'avertissement, sonores et/ou lumineux et/ou autres sous la forme par exemple d'un gyrophare. Cela permet d'avertir des conducteurs de véhicules de l'arrivée ou de la présence d'une personne ou d'un véhicule au niveau d'un croisement.

Un inconvénient de ce dispositif est que l'avertisseur détecte la présence d'un élément (par exemple échelle, palette de marchandise, etc...), d'un véhicule ou d'une personne sur une voie, même si ce véhicule, cet élément ou cette personne est immobile.

De plus, il arrive que cette voie desserve plusieurs accès, et que la personne ou le véhicule n'a pas pour intention de traverser à ce croisement. Or le détecteur de présence ne permet pas de faire la différence.

Le fait d'utiliser un détecteur de mouvement permet de résoudre cet inconvénient, mais cette solution tout comme la précédente ne permet pas de détecter si la personne ou le véhicule a pour intention de traverser, il ne fait pas non plus de différence.

Il en résulte que l'activation de ou des avertisseurs se fait sans besoin réel d'indiquer un danger. De ce fait, la vigilance des personnes envers ces moyens d'avertissement peut s'atténuer dans le temps.

Il existe aussi des portillons montés sur une structure, disposés sur un chemin piéton avant un croisement d'un passage de véhicules, cette structure comportant un contacteur mécanique actionné par l'ouverture du portillon, ledit contacteur actionnant des moyens d'avertissement sonores et/ou lumineux et/ou autres sous la forme par exemple d'un gyrophare. Cela permet d'avertir des conducteurs de véhicules de l'arrivée d'une personne au niveau d'un croisement, et de sa traversée imminente.

Il existe également des moyens de détection de danger en hauteur sous la forme par exemple de barres ou de fils de sécurité en hauteur, installées à l'avant de passage d'une hauteur définie, qui sont sensibles à la pression ou la déformation. Lorsque ces moyens de détection de danger en hauteur, par exemple un véhicule chargé ou non d'un produit ou d'une marchandise, détecte un dépassement de la hauteur du passage, ces moyens actionnent des moyens d'avertissement sonores et/ou lumineux et/ou autres sous la forme par exemple d'un gyrophare.

Dans le cas d'un recul d'un véhicule dans un lieu exigu, comme par exemple lorsqu' un camion recule pour se rapprocher d'un quai d'une plateforme logistique, les angles morts sont importants, et l'appréciation des distances dans les rétroviseurs est ardue. Il est alors possible de ne pas voir une personne à proximité du véhicule ou du quai, ce qui peut provoquer des accidents.

Pour y remédier, il est connu d'installer une caméra et/ou un radar de recul sur le camion, afin de faciliter les manoeuvres pour le conducteur dudit camion.

Toutes les solutions additionnelles de sécurité présentées ci avant peuvent faire partie d'un système global permettant de réduire les risques d'accident.

Ce système et les solutions additionnelles de sécurité qui le constituent présentent toutefois un inconvénient qui est celui du cout et des investissements importants nécessaires pour leur installation, leur entretien et leur maintenance.

En effet, afin de limiter les risques d'accident sur un lieu, il est nécessaire de mettre en place une pluralité de chaque solution additionnelle de sécurité.

Ces solutions additionnelles de sécurité étant différentes, elles nécessitent du matériel différent, et des pièces détachées nombreuses pour assurer un entretien et une maintenance adaptée.

C'est d'autant plus vrai que les personnes et conducteurs de véhicules sur le lieu, du fait même de l'installation de ces solutions additionnelles de sécurité ou de ce système global, leurs accordent une confiance importante et présument être avertis en cas de situation dangereuse par une ou des solutions additionnelles de sécurité installées.

Une panne ou une défaillance d'une ou plusieurs de ces solutions additionnelles de sécurité a donc un effet contraire d'augmenter les risques d'accidents.

Il est donc essentiel que les équipes chargées de l'entretien et de la maintenance de ces solutions additionnelles de sécurité ou de ce système global soit formées sur le fonctionnement, l'entretien et la maintenance de chaque type de solution additionnelle de sécurité installée.

En outre, il convient de noter que les implantations des entrepôts ou des plateformes logistiques peuvent changer plusieurs fois, pour des raisons d'évolution des flux organisationnels, ou du fait d'ajout de surface au sol. Il en résulte que les solutions additionnelles de sécurité doivent alors être démontées, et éventuellement réutilisées pour leur seule même fonction. Toute modification occasionne des couts de rachat et/ou d'installation.

C'est donc un objectif de l'invention que de proposer un système détecteur avertisseur permettant d'apporter une solution alternative aux solutions additionnelles de sécurité présentées ci avant.

Un autre objectif de l'invention est de proposer un système détecteur avertisseur simple, peu couteux, compact, et performant, permettant une utilisation, un entretien et une maintenance aisés.

Un autre objectif de l'invention est de proposer un système détecteur avertisseur amovible, pouvant être déplacé et installé rapidement.

L'invention concerne enfin une installation équivalente au système global, qui soit économique et qui ne présente pas les inconvénients du système global présenté ci avant.

A **cet effet l'invention concerne** un système détecteur avertisseur comportant un corps longitudinal, au moins un organe de détection de présence disposé latéralement sur ledit corps, des moyens de traitement du signal de détection et des moyens d'actionnement de moyens avertisseur, **caractérisé par le fait que** le au moins un organe de détection est monté pivotant par rapport au corps autour d'un axe longitudinal.

Cela permet de modifier l'angle et donc la zone de détection de l'organe de détection. Un tel système détecteur avertisseur est polyvalent par le fait que chaque organe de détection est pivotant.il peut être utilisé pour différents usages selon différentes configurations, notamment les configurations décrites dans les paragraphes suivants.

Ce système détecteur avertisseur peut être utilisé à proximité d'un croisement pour détecter la présence d'une personne ou d'un véhicule qui entre dans le champ de détection d'un organe de détection. Il est possible d'orienter aisément et rapidement chaque organe de détection pour optimiser la détection.

Le système détecteur avertisseur peut alors comporter un seul organe de détection pour détecter la présence dans un cône de détection d'une personne ou d'un véhicule, et actionner les moyens avertisseurs.

Le système détecteur avertisseur peut alternativement comporter deux organes de détection qui se recoupent sur un cône simultané de détection, ce qui permet de détecter une présence d'une personne ou d'un véhicule, et le sens de déplacement de ladite personne ou dudit véhicule pour actionner les moyens avertisseurs une fois qu'est détecté la présence dans un premier organe de détection puis simultanément par les deux organes de détection.

Le système détecteur avertisseur peut alternativement comporter deux organes de détection qui présentent des cônes de détection contigus, ce qui permet de détecter un sens de déplacement d'une personne ou d'un véhicule détecté, une fois qu'est détecté la présence de ladite personne ou véhicule par un premier organe de détection puis par le second organe de détection. Selon le sens de détection, le système détecteur avertisseur peut actionner les moyens avertisseurs ou non.

Le système détecteur avertisseur peut aussi être installé à un carrefour, en hauteur et/ou dans un angle, et comporter deux organes de détection couvrant des zones sur deux voies se croisant, et depuis lesquelles il n'y a pas de visibilité de l'une vers l'autre et réciproquement. Cette configuration permet de détecter une présence d'une personne ou d'un véhicule dans une zone, et une présence d'une personne ou d'un véhicule dans une autre zone, et en cas de détection simultanée, actionner les moyens avertisseurs.

Le système détecteur avertisseur peut être utilisé sur un quai de chargement, contre lequel viennent de garer en marche arrière des camions.

Le système détecteur avertisseur peut alors comme décrit précédemment comporter un seul organe de détection pour détecter dans un cône de détection la présence d'une personne ou d'un véhicule, et actionner les moyens avertisseurs. Cela permet d'avertir des personnes ou d'autres véhicules à proximité du fait qu'un véhicule manoeuvre.

Le système détecteur avertisseur peut comporter alternativement comme décrit précédemment deux organes de détection qui se recoupent sur un cône simultané de détection, ce qui permet de détecter une présence dans un cône de détection d'une personne ou d'un véhicule par un premier organe de détection, les moyens avertisseurs émettant des premiers signaux avertisseurs, puis simultanément par deux organes de détection, les moyens avertisseurs émettant alors des seconds signaux avertisseurs. Cela permet d'obtenir une fonction de radar de recul détectant différents degrés de distance.

Ce système détecteur avertisseur peut sous cette configuration avertir le conducteur du véhicule qui se gare, mais aussi ou alternativement avertir des personnes ou d'autres véhicules à proximité du fait qu'un véhicule manoeuvre.

Le système détecteur avertisseur peut comporter alternativement comme décrit précédemment deux organes de détection qui présentent des cônes de détection contigus, ce qui permet de détecter un sens de déplacement d'une personne ou d'un véhicule détecté, présence de ladite personne ou véhicule par un premier organe de détection puis par le second organe de détection. Selon le sens de détection, le système détecteur avertisseur peut actionner les moyens avertisseurs ou non.

Cela permet ainsi qu'un camion à quai ou un camion qui part n'active pas les moyens avertisseurs.

Le système détecteur avertisseur peut sous cette configuration avertir le conducteur du véhicule qui se gare, mais aussi avertir des personnes ou d'autres véhicules à proximité du fait qu'un véhicule manoeuvre.

Le système détecteur avertisseur peut être utilisé en hauteur, à proximité d'un passage de hauteur définie.

Le système détecteur avertisseur peut alors comprendre comme décrit précédemment un, deux ou plusieurs organes de détection qui présentent des cônes de détection contigus ou qui se recoupent, pour former des moyens de détection de danger en hauteur.

Il convient de noter pour répondre à ce cas d'utilisation, il peut y avoir un ou deux systèmes détecteur avertisseur sous la forme de bornes attachées en hauteur ou de poteaux d'une hauteur dépassant celle du passage, mais il peut y avoir aussi un système détecteur avertisseur sous la forme d'une arche en « U » inversée.

**Selon une autre caractéristique de l'invention,** le système détecteur avertisseur comporte des moyens d'assemblage et de pivotement d'un portillon.

Les moyens d'assemblages sont montés longitudinalement au corps.

Le système détecteur avertisseur peut être utilisé comme structure de support d'un portillon. Préférentiellement dans le cadre de la présente invention, ledit portillon n'est pas un organe de détection selon l'invention.

**Selon une autre caractéristique de l'invention,** le système détecteur avertisseur comporte un portillon monté sur le moyens d'assemblage et de pivotement d'un portillon.

**Selon une autre caractéristique de l'invention,** les moyens d'assemblage et de pivotement d'un portillon sont de part et d'autre d'un organe de détection.

L'organe de détection du système détecteur avertisseur entre les moyens d'assemblage et de pivotement du portillon peut détecter l'ouverture ou la fermeture du portillon et actionner les moyens avertisseurs.

Le système détecteur avertisseur peut alternativement comporter deux organes de détection qui se recoupent sur un cône simultané de détection, ce qui permet de détecter le sens d'ouverture du portillon pour actionner les moyens avertisseurs, lorsque le portillon est détecté dans un cône de détection d'un premier organe de détection, puis simultanément par les deux organes de détection.

Le système détecteur avertisseur peut comporter deux organes de détection qui présentent des cônes de détection contigus, ce qui permet de détecter aussi le sens d'ouverture du portillon pour actionner les moyens avertisseurs une fois qu'est détecté le portillon par un premier organe de détection puis simultanément par les deux organes de détection.

Selon le sens de détection, le système détecteur avertisseur peut actionner les moyens avertisseurs ou non.

Le système détecteur avertisseur peut alternativement comporter deux organes de détections, un entre les moyens d'assemblage et de pivotement du portillon qui détecte l'ouverture du portillon, et un autre qui détecte la présence d'une personne ou d'un véhicule.

Cela permet par exemple de commander outre les moyens avertisseurs l'ouverture automatique du portillon si celui-ci est motorisé, ou de bloquer l'ouverture du portillon en cas de détection d'un véhicule ou d'une personne dans une autre zone non visible depuis la zone à proximité du portillon.

Les configurations du système détecteur avertisseur décrites ci avant sont donnés à titre d'exemples non limitatifs.

En fait, ce système détecteur avertisseur permet d'apporter une solution équivalente aux solutions additionnelles de sécurité présentées ci avant

Un système détecteur avertisseur utilisé selon une configuration décrite ci avant peut être rapidement modifié pour prendre une autre configuration décrite ci avant, les modifications intervenant au niveau de l'orientation du ou des organes de détection et de réglage des moyens de traitement du signal de détection et éventuellement des moyens d'actionnement de moyens avertisseur.

**Selon une caractéristique de l'invention,** le système détecteur avertisseur comporte des moyens avertisseurs latéraux.

**Selon une caractéristique de l'invention,** le système détecteur avertisseur comporte des moyens avertisseurs à une extrémité.

**Selon une caractéristique de l'invention,** tout ou partie du ou des organes de détection du système détecteur avertisseur sont un ou des organes de détection sans contact.

**Selon une caractéristique de l'invention,** tout ou partie du ou des organes de détection du système détecteur avertisseur comportent des émetteurs et des récepteurs d'ondes électromagnétiques.

Ces ondes dites radar présentent l'avantage de ne pas ou peu être influencées par la poussière ou les courants d'air.

**Selon une caractéristique de l'invention,** tout ou partie du ou des organes de détection du système détecteur avertisseur comportent des émetteurs et des récepteurs d'ondes de fréquence comprises entre 10¹¹ Hertz et 10¹⁴ Hertz

Ces ondes sont dites infrarouges. Les émetteurs et récepteurs correspondants sont économiques, robustes et couramment utilisés dans le domaine des détecteurs de sécurité. La maintenance en est donc facilitée.

**Selon une caractéristique de l'invention,** tout ou partie du ou des organes de détection du système détecteur avertisseur comportent des émetteurs et des récepteurs d'ondes acoustiques ou mécaniques.

Ces ondes sont portées par un milieu comme l'air, comme par exemple les ondes ultrasonores correspondant à des ondes de fréquence comprises entre 20 000 Hertz et 70 000 Hertz. De tels émetteurs et récepteurs sont économiques et couramment utilisés dans le domaine de l'industrie. La maintenance en est donc facilitée.

**Selon une caractéristique de l'invention,** le corps longitudinal du système détecteur avertisseur est formé de tout ou partie d'une borne ou d'un poteau. Selon un mode de réalisation encore plus préféré de l'invention le ou les organes de détection sont inclus dans le volume dudit poteau. Selon un mode de réalisation tout à fait préféré, le ou les moyens avertisseurs sont inclus dans le volume dudit poteau.

Cela permet que le système détecteur avertisseur puisse former une borne ou un poteau, et s'intégrer harmonieusement dans les équipements de sécurités fixes présentés en début de description, de type poteaux et lisses.

En fait, le système avertisseur détecteur peut être utilisé comme poteau de sécurité, et des lisses peuvent être assemblées sur ledit système.

Un poteau peut être modifié pour devenir le corps du système détecteur avertisseur, rendant économique sa fabrication.

Il convient de noter que le corps longitudinal du système détecteur avertisseur peut être également formé d'un élément tubulaire rapporté au sol, à une borne, à un élément structurel ou à un poteau et apte à être solidarisé par des moyens d'assemblage tel qu'une plaque d'une part respectivement vissée au sol, à ladite borne ; audit élément structurel ou audit poteau, et d'autre part audit système détecteur avertisseur.

Cet élément tubulaire peut être une portion de poteau de sécurité.

Le système détecteur avertisseur peut également être collé, soudé, ou boulonné, ou rendu solidaire par tout autre moyen de solidarisation avec le sol, avec une borne, avec un élément structurel ou avec un poteau.

Le corps longitudinal du système détecteur avertisseur peut également prendre tout autre forme.

**Selon une caractéristique de l'invention,** les moyens de traitement du signal de détection et les moyens d'actionnement de moyens avertisseur comportent un calculateur et des moyens d'enregistrement des conditions d'actionnement des moyens avertisseurs.

Le système détecteur avertisseur peut comporter une interface homme machine apte à modifier les réglages des moyens de traitement du signal de détection et les moyens d'actionnement de moyens avertisseurs selon des programmations préétablies ou à définir.

Ces modifications des réglages des moyens de traitement du signal de détection et des moyens d'actionnement de moyens avertisseurs peuvent aussi être faits éventuellement à distance par des moyens de communication filaires ou sans fil.

On peut régler les moyens de traitement du signal de détection et les moyens d'actionnement des moyens avertisseurs pour utiliser le système détecteur avertisseur selon différentes configurations, notamment les configurations décrites dans les paragraphes précédents.

Un tel système détecteur avertisseur est de conception simple, en peu de pièces, et est apte à proposer une alternative fiable à tous les équipements des solutions additionnelles de sécurité décrites ci avant, à un cout plus réduit.

**Selon une caractéristique de l'invention,** le système détecteur avertisseur comporte des moyens de réglage du ou des organes de détection, notamment analogiques, sous la forme de potentiomètres aptes à modifier des caractéristiques de détection du ou desdits organes de détection, comme par exemple la distance, la sensibilité ou l'angle de détection.

Cela permet de moduler simplement les caractéristiques du ou des organes de détection.

Alternativement, ces moyens de réglage peuvent être numériques.

**Selon une caractéristique de l'invention,** le système détecteur avertisseur comporte des moyens de motorisation du pivotement de chaque organe de détection.

Ces moyens de motorisation peuvent se présenter sous la forme par exemple d'un moteur pas à pas entrainant un arbre relié audit organe de détection, ledit arbre étant porté par l'axe de rotation dudit organe de détection.

**Selon une caractéristique de l'invention,** le système détecteur avertisseur comporte des moyens de verrouillage du pivotement de chaque organe de détection.

Ces moyens de verrouillage d'un organe de détection peuvent se présenter par exemple sous la forme d'une vis traversant à la fois le corps et l'organe de détection, apte à bloquer la rotation dudit organe de détection.

**L'invention concerne également** une installation comportant au moins un système détecteur avertisseur présentant tout ou partie des caractéristiques d'un système détecteur avertisseur décrit ci avant.

Le fait que les fonctions des différentes solutions additionnelles de sécurité puissent être réalisées par des systèmes détecteurs avertisseurs de conception similaire, utilisant des éléments identiques permet des coûts de fabrication, d'entretien et de maintenance réduits par rapport à un système global tel que décrit ci avant.

D'autre buts et avantages de la présente invention apparaîtront au cours de la description qui va suivre se référant aux dessins ci-joints illustrant des exemples de réalisation et dans lesquels :
[Fig 1] est une vue schématique en perspective d'un système détecteur avertisseur selon l'invention, comportant des moyens avertisseurs latéraux.
[Fig 2] est une vue schématique en perspective d'un deuxième système détecteur avertisseur selon l'invention, comportant des moyens avertisseurs latéraux et des moyens d'assemblage et de pivotement d'un portillon.
[Fig 3] est une vue schématique de détail en perspective du système détecteur avertisseur de la figure 2, sans couvercle.
[Fig 4] est une vue schématique d'une installation selon l'invention, comportant deux systèmes détecteurs avertisseurs de la figure 2 comportant chacun un portillon monté sur les moyens d'assemblage et de pivotement de chacun des système détecteurs avertisseurs.
[Fig 5] est une vue schématique en perspective d'un troisième système détecteur avertisseur selon l'invention, comportant trois organes de détection et des moyens avertisseurs d'extrémité.
[Fig 6] est une vue schématique d'encore une autre installation selon l'invention comportant deux système détecteurs avertisseurs de la figure 5.
[Fig 7] est une vue schématique en perspective d'encore une autre installation selon l'invention, comportant un quatrième système détecteur avertisseur selon l'invention, ledit système détecteur avertisseur comportant des moyens avertisseurs d'extrémité latéraux ; le ou les organes de détection étant non visibles, à l'arrière dudit système détecteur avertisseur.

L'invention a trait à un système détecteur avertisseur 1, ci-après désigné sous le terme système 1.

Ce système 1 comporte un corps longitudinal 2, ici tubulaire, étendant longitudinalement verticalement comme illustré sur les figures.

En référence au figures, le système 1 est considéré dans sa position d'utilisation, ici verticalement.

Le corps 2 peut aussi présenter une forme d'arche avec deux poteaux verticaux et une poutre verticale reliant ces deux poteaux, selon un mode de réalisation non illustré ici, ou bien sur tout autre forme.

Le corps 2 est coiffé d'un couvercle 3 qui vient fermer une extrémité du corps 2.

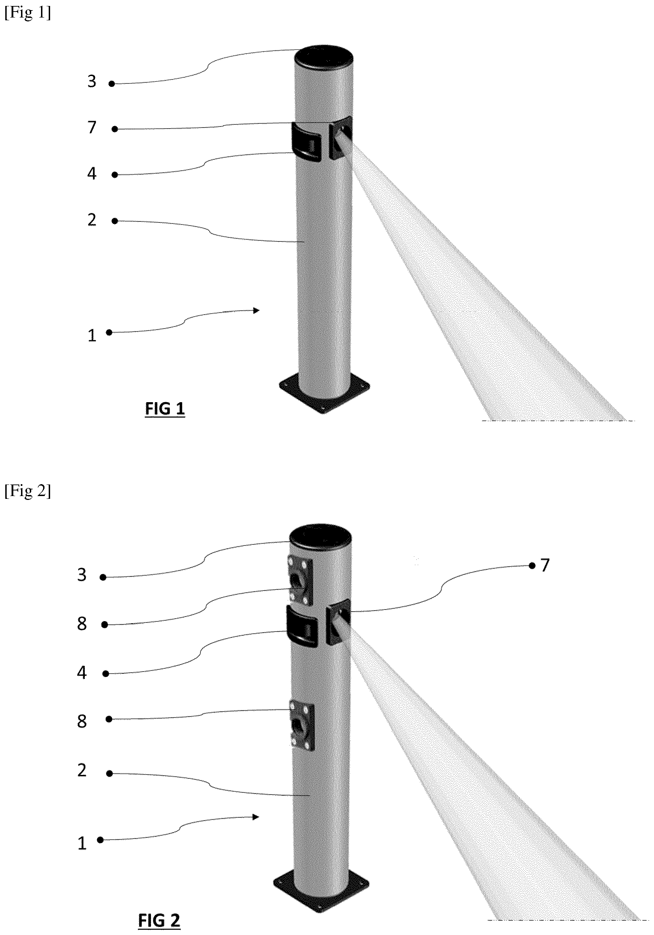

Le corps 2 peut être posé sur le sol et rendu solidaire à celui-ci par une plaque 20 solidaire par des vis traversant d'une part le corps 2 et d'autre part le sol, comme illustré sur les figures 1,2,3 et 7.

En fait, le corps 2 peut être formé par une borne creuse ou un poteau de sécurité, utilisé pour réaliser des barrières.

En fait, le corps 2 peut être formé par une portion d'un tube creux utilisé pour former des bornes ou des poteaux de sécurité, utilisé pour réaliser des barrières.

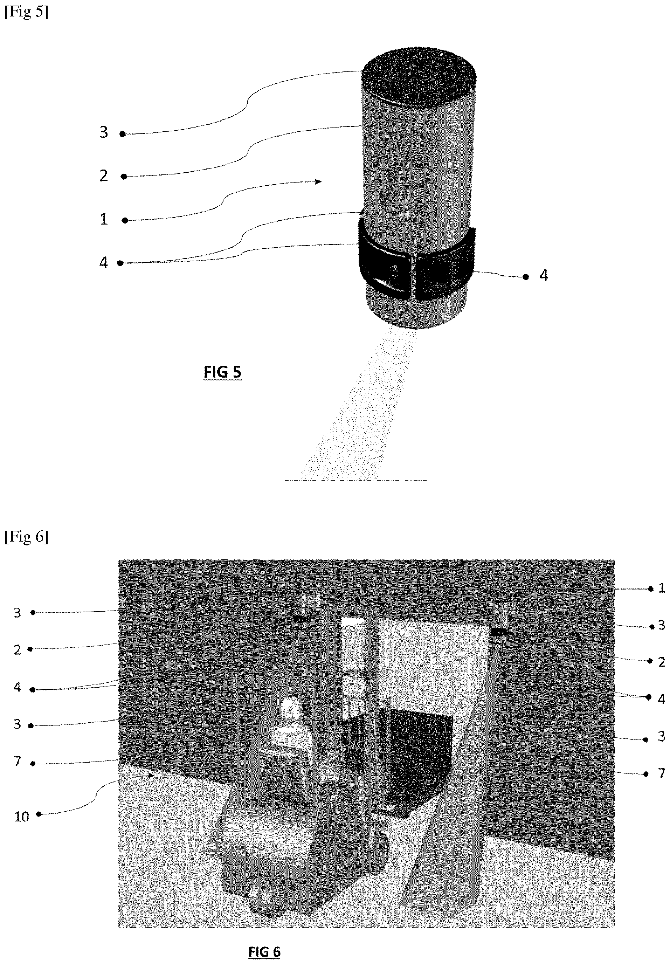

Le corps peut être coiffé de deux couvercles 3, un à chaque extrémité, comme illustré sur les figures 5 et 6.

Le système 1 peut comporter au moins un organe de détection de présence 4 désigné ci après sous les termes organe de détection 4.

Le système 1 peut comporter un seul organe de détection 4 comme illustré sur les figures 1 à 4 et 7.

Le système 1 peut comporter trois organes de détection 4 comme illustré sur les figures 5 et 6.

Le système 1 peut comporter deux organes de détection 4 selon un mode de réalisation de l'invention non illustré ici, voire quatre ou plus organes de détection 3.

Le ou les organes de détection 4 sont disposés latéralement sur le corps 2, comme illustré sur les figures.

Les organes de détection 4 sont ici des organes de détection 4 sans contact, ils comportent des émetteurs et des récepteurs d'ondes électromagnétiques, notamment d'ondes de fréquence comprises entre 10¹¹ Hertz et 10¹⁴ Hertz, ce qui correspond à des ondes dites infrarouge.

Ce type d'organe de détection 4 présente l'avantage d'être à la fois performant, robuste et économique, simple à remplacer, et à changer, facilement disponible sur le marché.

Ces organes de détection 4 peuvent ici émettre des faisceaux d'ondes infrarouge portées par un même plan horizontal, définissant une zone de détection conique dont la pointe correspond à l'émetteur desdites ondes.

En fait ces organes de détection 4 présentent l'avantage de convenir pour cet usage et la fonction de détection attendue tout en étant particulièrement abordables économiquement.

Bien entendu, ces organes de détection 4 peuvent être aussi d'autre types, comme des émetteurs et des récepteurs d'ondes acoustiques ou mécaniques, ou des caméras, bien que les couts soient plus élevés, qu'ils nécessitent un traitement du signal plus complexe, et qu'ils sont plus sensible à aux agressions de l'environnement (poussière, vent, fumée, etc...).

Ledit ou lesdits organes de détection 4 sont montés pivotants par rapport au corps 4 autour d'un axe longitudinal, ce qui permet de modifier l'angle et donc la zone de détection de l'organe de détection 4.

Le pivotement peut être motorisé, actionné par un moteur ou manuellement. Le système 1 peut comporter des moyens de verrouillage du pivotement sous la forme par exemple de vis traversant le corps 2 et l'organe de détection 4.

Cet organe de détection 4 est relié à des moyens de traitement du signal de détection et des moyens d'actionnement de moyens avertisseur 5.

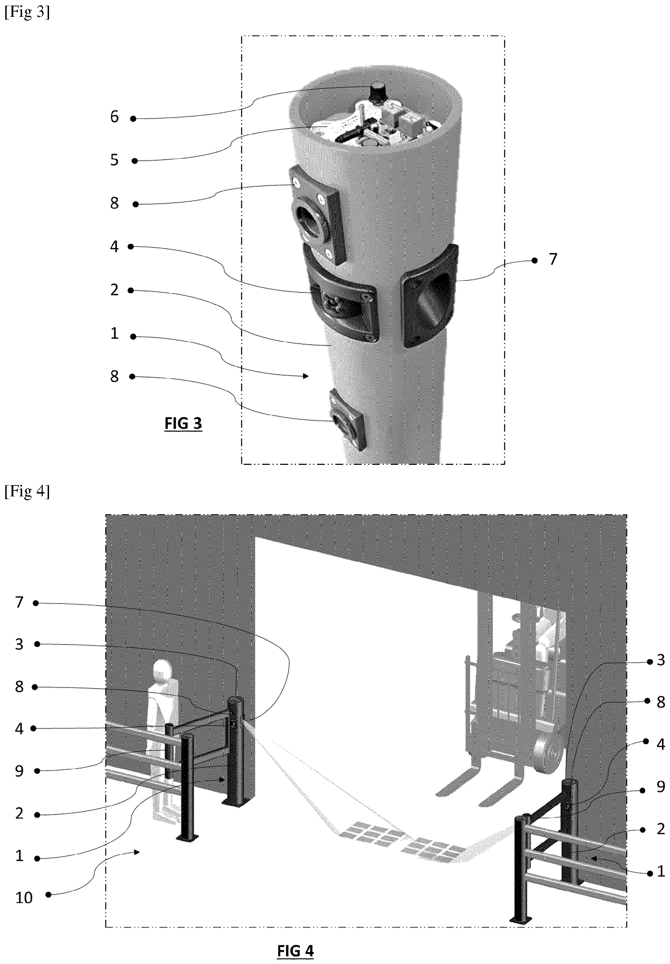

Ces moyens de traitement du signal de détection et des moyens d'actionnement de moyens avertisseur 5 que comportent le système 1 peuvent se présenter sous la forme d'une unité informatique, de type carte électronique, comportant un calculateur et des moyens d'enregistrement des conditions d'actionnement des moyens avertisseurs, comme illustré figure 3.

Les moyens d'actionnement de moyens avertisseurs peuvent être des interrupteurs électroniques.

Ces interrupteurs électroniques peuvent commander l'actionnement de moyens avertisseurs 7.

Le système 1 peut comporter une interface homme machine apte à modifier les réglages des moyens de traitement du signal de détection et les moyens d'actionnement de moyens avertisseurs selon des programmations préétablies ou à définir.

Ces modifications des réglages des moyens de traitement du signal de détection et des moyens d'actionnement de moyens avertisseurs peuvent aussi être faits éventuellement à distance par des moyens de communication filaires ou sans fil.

Le système 1 peut comporter des moyens de réglage du ou des organes de détection 6, notamment analogiques, sous la forme de potentiomètres aptes à modifier des caractéristiques de détection du ou desdits organes de détection, comme par exemple la distance, la sensibilité ou l'angle de détection.

Le système 1 peut comporter lesdits moyens avertisseurs 7, sous la forme ici d'un projecteur d'un signal lumineux 70 sur le sol.

Ce projecteur de signal lumineux peut être placé latéralement sur le corps 2, comme illustré sur les figures 1, 2, 3 4 ou 7, ou à une extrémité du corps 2, dans un couvercle 3, comme illustré sur les figures 5 et 6.

Ce projecteur de signal lumineux 70 projette une lumière, un pictogramme lumineux, un assemblage de couleurs ou tout autre signal lumineux apte à avertir les piétons ou les conducteurs de véhicules.

Les moyens avertisseurs 7 peuvent comporter également un émetteur d'un signal sonore, de type par exemple son, musique ou paroles.

Cet émetteur de signal sonore peut être intégré dans le corps 2 ou être installé à distance.

Les moyens avertisseurs 7 peuvent comporter alternativement ou complémen-tairement des moyens d'envoi d'information à une unité de surveillance à distance, de type centre informatique de gestion ou de maintenance.

Il convient de noter que les signaux lumineux ou sonores peuvent être modifiés régulièrement pour réduire l'accoutumance des personnes à un type constant de signal.

Le système 1 peut comporter également des moyens d'assemblage et de pivotement d'un portillon 8, comme illustré sur la figure 2 et la figure 3.

Ces moyens d'assemblage et de pivotement d'un portillon 8 se présentent sous la forme de deux orifices taraudés l'un au-dessus de l'autre, avec entre les deux un organe de détection 4 comme illustré sur la figure 2 et la figure 3.

Le système 1 peut comporter également un portillon 9 apte à être monté sur lesdits moyens d'assemblage et de pivotement d'un portillon 8, comme illustré sur la figure 4.

Ce portillon 9 peut être motorisé avec un moteur commandé par les moyens de traitement du signal de détection et des moyens d'actionnement de moyens avertisseur 5.

Les moyens de traitement du signal de détection et des moyens d'actionnement de moyens avertisseur 5 peuvent être intégrés dans le corps 2 ou être à distance du corps 2, connecté par fil ou par un émetteur/récepteur sans fil.

Le ou les organes de détection 4, les moyens de traitement du signal de détection et des moyens d'actionnement de moyens avertisseur 5, les moyens avertisseurs s'ils sont intégrés dans le corps 2, et des éventuelles motorisation peuvent être alimentés électriquement par exemple par batterie ou par un réseau d'alimentation citadin en électricité.

Il convient de noter que le montage d'un ou plusieurs organes de détection sur un corps 2 ne nécessite que de percer un trou et de visser ledit organe de détection dans ledit trou.

Il en est de même pour l'installation des moyens d'assemblage et de pivotement d'un portillon 8 dans le corps 2, ou de l'installation des moyens avertisseurs 7 dans le corps 2 ou un couvercle 3.

De plus, l'utilisation pour réaliser le corps 2 d'un poteau de barrière en tout ou partie permet un remplacement à peu de frais du corps 2.

Les organes de détection 4, la carte électronique des moyens de traitement du signal de détection et des moyens d'actionnement de moyens avertisseur 5, les moyens avertisseurs 7, les moyens d'assemblage et de pivotement d'un portillon 8 sont simples et peu couteux. De plus ils sont réutilisables et interchangeables.

Un tel système 1 peut être utilisé pour un grand nombre de configurations, tel que décrit ci avant, notamment dans une installation 10 comportant au moins un tel système 1

Comme illustré sur la figure 1 ou 2, un système 1 peut fonctionner à la manière d'un détecteur de présence et un avertisseur.

Comme illustré sur l'installation de la figure 4, un système 1 comportant des moyens d'assemblage et de pivotement d'un portillon 8 et un portillon 9 peut fonctionner à la manière d'un portillon monté sur une structure tel que décrit ci avant.

Comme illustré sur l'installation de la figure 6, un système 1 peut fonctionner à la manière de moyens de détection de danger en hauteur tel que décrits ci avant.

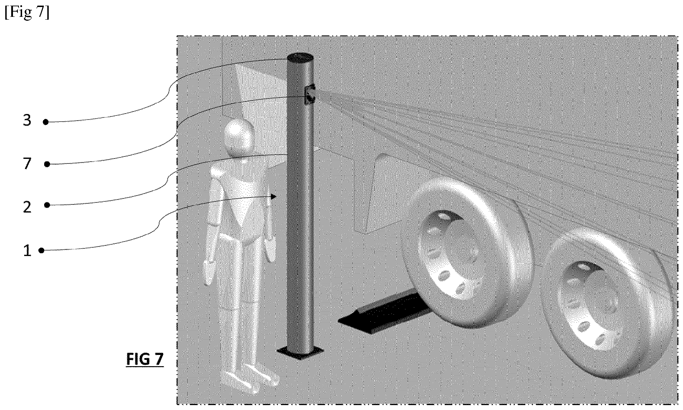

Comme illustré sur l'installation de la figure 7, un système 1 peut fonctionner à la manière de moyens de sécurisation lors d'une manoeuvre d'un véhicule venant se garer en marche arrière à un quai d'une plateforme logistique, ou équivalent.

Du fait de sa polyvalence et de son faible cout, de sa facilité d'installation et de maintenance, le système 1 peut être utilisé en grand nombre dans une installation 10 pour limiter les risques d'accidents.

## Revendications

1. Système détecteur avertisseur (1) comportant un corps (2) longitudinal, au moins un organe de détection (4) de présence disposé latéralement sur ledit corps (2), des moyens de traitement du signal de détection et des moyens d'actionnement de moyens avertisseur (5), **caractérisé par le fait que** le au moins un organe de détection (4) est sans contact et **par le fait qu'**il est monté pivotant par rapport au corps (2) autour d'un axe longitudinal, ce qui permet de modifier l'angle et donc la zone de détection dudit au moins un organe de détection (4).

2. Système détecteur avertisseur (1) selon la revendication 1, **caractérisé par le fait qu'**il comporte des moyens d'assemblage et de pivotement d'un portillon (8) montés longitudinalement sur ledit corps (2).

3. Système détecteur avertisseur (1) selon la revendication 2, **caractérisé par le fait que** les moyens d'assemblage et de pivotement d'un portillon (8) sont de part et d'autre d'un organe de détection (4).

4. Système détecteur avertisseur (1) selon la revendication 2 ou 3, **caractérisé par le fait qu'**il comporte un portillon (9) monté sur les moyens d'assemblage et de pivotement d'un portillon (8).

5. Système détecteur avertisseur (1) selon la revendication 4, **caractérisé par le fait que** tout ou partie du ou des organes de détection (4) du système détecteur avertisseur (1) comportent des émetteurs et des récepteurs d'ondes électromagnétiques.

6. Système détecteur avertisseur (1) selon la revendication 5, **caractérisé par le fait que** tout ou partie du ou des organes de détection (4) du système détecteur avertisseur (1) comportent des émetteurs et des récepteurs d'ondes de fréquence comprises entre 10¹¹ Hertz et 10¹⁴ Hertz.

7. Système détecteur avertisseur (1) selon la revendication 4, **caractérisé par le fait que** tout ou partie du ou des organes de détection (4) du système détecteur avertisseur (1) comportent des émetteurs et des récepteurs d'ondes acoustiques ou mécaniques.

8. Système détecteur avertisseur (1) selon l'une des revendications 1 à 7, **caractérisé par le fait que** le corps (2) du système détecteur avertisseur (1) est formé de tout ou partie d'une borne ou poteau.

9. Système détecteur avertisseur (1) selon l'une des revendications 1 à 8, **caractérisé par le fait que** les moyens de traitement du signal de détection et les moyens d'actionnement de moyens avertisseur (5) comportent un calculateur et des moyens d'enregistrement des conditions d'actionnement des moyens avertisseurs.

10. Installation (10) comportant au moins un système détecteur avertisseur (1) selon l'une des revendications 1 à 9.
